# EUROPÄISCHE PATENTSCHRIFT

(11) **EP 0 411 305 B1**
(45) Veröffentlichungstag und Bekanntmachung des Hinweises auf die Patenterteilung: **16.03.1994**
(21) Anmeldenummer: 90111851.3
(22) Anmeldetag: 22.06.1990
(51) Int. Cl.: B60R 9/055, E05C 9/02

(54) **Dachkoffer mit verschliessbarem Deckelteil**
Roof luggage case with lockable lid
Coffre de toit avec couvercle fermant à serrure

(30) Priorität: 03.08.1989 DE 3925708
(43) Veröffentlichungstag der Anmeldung: 06.02.1991
(73) Patentinhaber: JETBAG GMBH, D-92318 Neumarkt (DE)
(72) Erfinder: Lieb, Willi, D-8431 Mühlhausen (DE)
(74) Vertreter: Matschkur, Götz, Lindner Patent- und Rechtsanwälte

(56) Entgegenhaltungen:
- DE-U- 8 434 769
- US-A- 4 667 492

## Beschreibung

Die Erfindung bezieht sich auf einen Dachkoffer mit einem Bodenteil, einem daran anscharnierten Deckelteil, und einem auf der dem Scharnier gegenüberliegenden Seite angeordneten Schloß, sowie mit einer Befestigungseinrichtung zur Halterung des Dachkoffers auf dem Dach eines Pkw's, wobei an der Innenseite des Deckelteils ein sich im wesentlichen über die gesamte Länge des Koffers erstreckendes, eine Vielzahl von Schließhaken aufweisendes Winkelprofil starr mit dem Deckelteil verbunden ist und an der entsprechenden Innenseite des Bodenteils eine federnd gelagerte, Ausnehmungen aufweisende Verschlußschiene vorgesehen ist, in die in der einen Endstellung (Schließstellung) die Schließhaken des Deckelteils einrasten, und wobei der Verschlußschiene eine Verriegelungseinrichtung zugeordnet ist.

Üblicherweise sind Dachkoffer nur mit einem oder zwei getrennten Verriegelungshaken versehen, die jeweils getrennt aufgesperrt werden müssen, was, insbesondere wegen der Gefahr, daß ein einmal aufgesperrtes Schloß vor dem Aufsperren des zweiten Schlosses wieder schließt, das Öffnen des Dachkoffers stark erschwert. Konstruktionen mit nur einem einzigen Verriegelungshaken, die ebenfalls umfänglich auf dem Markt sind, haben aber den entscheidenden Nachteil, daß sie äußerst unsicher sind, da die aus wenig verwindungssteifem Kunststoffmaterial bestehenden relativ langen Deckelteile bei solchen Konstruktionen einfach aufgebogen werden können, ohne daß das Schloß geöffnet wird.

Um diese Schwierigkeiten zu vermeiden, ist im Deutschen Gebrauchsmuster DE-U-84 34 769.4 bereits eine Konstruktion der eingangs genannten Art vorgeschlagen worden, bei der eine Mehrzahl von Schließstellen vorgesehen ist, die jeweils gemeinsam durch eine verschiebbare Verschlußschiene betätigt werden können. Die dort vorgeschlagene Konstruktion zur Betätigung der Schließstange mit einer Rückstellfeder ist jedoch relativ aufwendig und auch störanfällig.

Der Erfindung liegt daher die Aufgabe zugrunde, einen Dachkoffer der eingangs genannten Art so auszugestalten, daß die Schließeinrichtung einfacher und funktionssicherer ist.

Zur Lösung dieser Aufgabe ist erfindungsgemäß vorgesehen, daß die Verschlußschiene ein quer zur Längsverschiebeachse angeordnetes Langloch aufweist, in welches ein um die Schloßachse drehbarer, auf einer Stirnplatte des Schloßzylinders angeordneter Mitnehmerbolzen eingreift, und daß die Verschlußschiene an einem Ende einen nach innen gekröpften Endabschnitt trägt.

Durch die erfindungsgemäße Anordnung kann die Drehbewegung des Schlosses in beiden Richtungen zur Verschiebung der Verschlußschiene herangezogen werden, so daß sowohl die Schließals auch die Öffnungsbewegung - und damit unter Vermeidung von Federn und sonstigen Rückstellorganen - alleine durch das Schloß erfolgt. Darüber hinaus verbleibt durch die Abkröpfung des das Langloch enthaltenden Abschnitts der Verschlußschiene nach innen zwischen der Wand des Bodeneils und dem Langlochabschnitt der Verschlußschiene genügend Platz, um die gesamte Länge des Schloßzylinders aufnehmen zu können.

Dabei liegt es auch noch im Rahmen der Erfindung, daß die Verschlußschiene, vorzugsweise an einem Ende, mit einem das Langloch enthaltenden Querschenkel versehen ist, so daß auch bei relativ schmalen Verschlußschienen, wie sie für die Funktion völlig ausreichend sind, auch entsprechend langgestreckte Langlöcher verwendet werden können, die es wiederum ermöglichen, daß der radiale Abstand des Mitnehmerbolzens von der Schloßachse nicht zu klein gewählt zu werden braucht und somit ein größerer Verstellweg möglich ist.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: einen Dachkoffer auf einem Pkw,
- Fig. 2: einen abgebrochenen vergrößerten Schnitt durch die Verschließvorrichtung entlang der Linie II-II in Fig. 1,
- Fig. 3: einen Längsschnitt durch den Dachkoffer längs der Linie III-III in Fig. 2, jedoch in verkleinertem Maßstab,
- Fig. 4: eine vergrößerte Teilansicht des rechten Endbereichs der Schließstange mit dem Schloß in Öffnungsstellung,
- Fig. 5: einen Schnitt der Linie V-V in Fig. 4, und
- Fig. 6: eine der Fig. 4 entsprechende Ansicht in Schließstellung der Verschlußschiene.

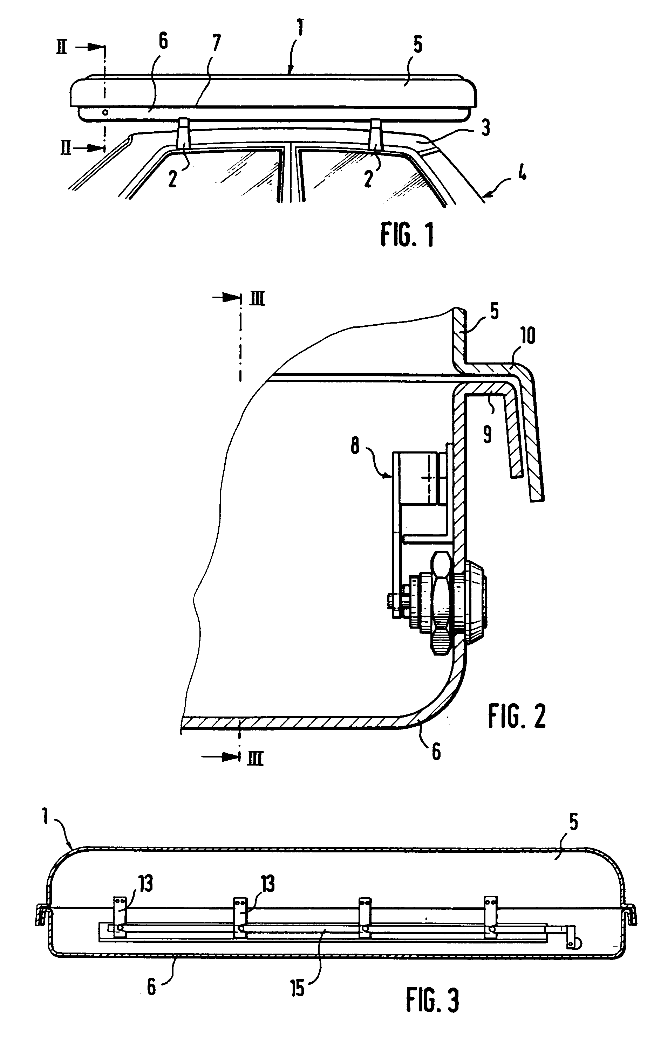

Der in Fig. 1 dargestellte Dachkoffer 1 ist mit einem, beispielsweise in die Regenrinnen des Kraftfahrzeugdachs eingreifende Füße aufweisenden Grundträger 2 auf dem Dach 3 eines Pkw's 4 befestigt und besteht aus einem Deckelteil 5 sowie einem Bodenteil 6. Das Deckelteil 5 ist mit dem Bodenteil 6 entlang einer Längsseite über ein - in der Zeichnung nicht dargestelltes - Scharnier verbunden. An der anderen Längsseite 7, der in Fig. 1 sichtbaren Vorderseite, ist die Verschließvorrichtung 8 angebracht, die in Fig. 2 vergrößert im Schnitt dargestellt ist. Auf dem U-förmig abgewinkelten Ende 9 des Unterteils 6 des Koffers liegt in Schließstellung das abgewinkelte Ende 10 des Deckelteils 5 auf. An der Auflagefläche zwischen Deckelteil 5 und Bodenteil 6 kann im übrigen eine in der Zeichnung nicht gezeigte Dichtung vorgesehen sein.

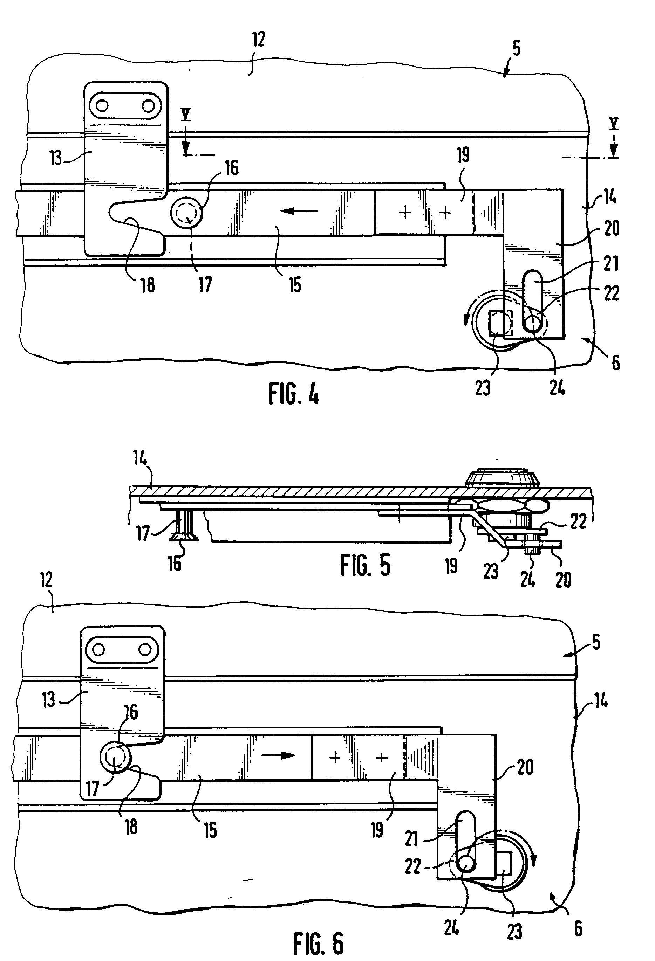

An der Innenseite 12 des Deckelteils sind Schließhaken 13 angenietet, die sich nach unten bis in den Bereich einer auf der Innenseite 14 des Bodenteils 6 längsverstellbaren Verschlußschiene 15 erstrecken. Auf dieser Verschlußschiene sind einen verbreiterten Kopf 16 aufweisende Arretierbolzen 17 angeordnet, welche in der in Fig. 6 gezeigten Schließstellung in die seitlichen Hakenschlitze 18 der Schließhaken 13 eingreifen, während sie in der in Fig. 4 gezeigten Öffnungsstellung seitlich aus diesen Schlitzen 18 ausgetreten sind, so daß die Schließhaken 13 sich an den Arretierbolzen 17 vorbeibewegen können und somit das Deckelteil 5 aufgeschwenkt werden kann. Die Verschlußschiene 15 trägt am einen Ende ein abgekröpftes Endteil 19 mit einem Querschenkel 20, in welchem ein Langloch 21 ausgebildet ist. In dieses Langloch 21 greift ein auf einer Stirnplatte 22 des Schloßzylinders 23 angeordneter Mitnehmerbolzen 24 ein, wobei das Schloß so ausgebildet und angeordnet ist, daß in seiner einen Endstellung die Pos. gem. Fig. 4 und in der anderen Endstellung die Position gem. Fig. 6 eingenommen wird. Durch die Verdrehung des Schlosses mit Hilfe eines Schlüssels zwischen diesen beiden Endstellungen erfolgt eine Verschiebung der Verschlußschiene 15 um den doppelten radialen Abstand des Mitnehmerbolzens 24 von der Schloßachse, so daß durch diesen Abstand der gewünschte Verstellweg der Verschlußschiene entsprechend der Eingreiftiefe des Schlitzes 18 eingestellt werden kann.

Durch die erfindungsgemäße Anordnung läßt sich in extrem einfacher Weise eine Verschlußeinrichtung mit einer Verschlußstange schaffen, die eine Vielzahl von Schließhaken gleichzeitig betätigt. In Fig. 3 sind beispielsweise vier über die Länge des Dachkoffers verteilte Schließstellen vorgesehen.

## Patentansprüche

1. Dachkoffer mit einem Bodenteil (6), einem daran anscharnierten Deckelteil (5), und einem auf der dem Scharnier gegenüberliegenden Seite angeordneten Schloß (23), sowie mit einer Befestigungseinrichtung (2) zur Halterung des Dachkoffers auf dem Dach eines Pkw's, wobei an der Innenseite (12) des Deckelteils (5) ein sich im wesentlichen über die gesamte Länge des Koffers (1) erstreckendes, eine Vielzahl von Schließhaken (13) aufweisendes Winkelprofil starr mit dem Deckelteil (5) verbunden ist und an der entsprechenden Innenseite des Bodenteils (6) eine federnd gelagerte, Ausnehmungen aufweisende Verschlußschiene (15) vorgesehen ist, in die in der einen Endstellung (Schließstellung) die Schließhaken des (13) Deckelteils einrasten, und wobei der Verschlußschiene (15) eine Verriegelungseinrichtung zugeordnet ist, dadurch gekennzeichnet, daß die Verschlußschiene (15) ein quer zur Längsverschiebeachse angeordnetes Langloch (21) aufweist, in welches ein um die Schloßachse drehbarer, auf einer Stirnplatte (22) des Schloßzylinders (23) angeordneter Mitnehmerbolzen (24) eingreift, und daß die Verschlußschiene (15) an einem Ende einen nach innen gekröpften Endabschnitt (19) trägt.

2. Dachkoffer nach Anspruch 1, dadurch gekennzeichnet, daß die Verschlußschiene (15) mit einem das Langloch (21) enthaltenden Querschenkel (20) versehen ist.

## Claims

1. Roof luggage case having a bottom part (6), a lid part (5) hinged thereon, and a lock (23) located on the side opposite the hinge, as well as a fixing device (2) for mounting the roof luggage case on the roof of a passenger motor vehicle, wherein on the inner face (12) of the lid part (5) a corner profile extending over the whole length of the case (1) and having a plurality of closing hooks (13) is rigidly connected to the lid part (5), and a resiliently mounted locking rail (15) with recesses is provided on the corresponding inner face of the bottom part (6), into which the closing hooks (13) of the lid part engage in one position (the closed position), and wherein the locking rail (15) is associated with a locking device, characterised in that the locking rail (15) has a slot (21) disposed transverse to the longitudinal axis of displacement, into which slot a driver bolt (24) rotatable about the lock axis and disposed on one end plate (22) of the lock barrel (23) engages, and in that one end of the locking rail (15) has a section (19) which is bent inwards.

2. Roof luggage case according to claim 1, characterised in that the locking rail (15) is provided with a transverse flange (20) comprising the slot (21).

## Revendications

1. Coffre de toit comportant une partie de fond (6), une partie de couvercle (5) qui y est articulée par charnière, et une serrure (23) disposée sur le côté opposé à celui de la charnière, ainsi qu'un système de fixation (2) destiné à assurer le maintien du coffre de toit sur le toit d'une voiture particulière, un profilé en cornière qui s'étend sensiblement sur la totalité de la longueur du coffre (1) et qui comporte plusieurs crochets de fermeture (13), étant relié de manière rigide à la partie de couvercle (5), sur le côté intérieur (12) de celle-ci, et une barre de fermeture (15) montée de manière élastique étant prévue sur le côté intérieur correspondant de la partie de fond (6), cette barre de fermeture présentant des évidements dans lesquels viennent s'encliqueter les crochets de fermeture (13) de la partie de couvercle, pour une des positions extrêmes (position de fermeture), et un dispositif de verrouillage étant associé à la barre de fermeture (15), caractérisé en ce que la barre de fermeture (15) présente un trou oblong (21) disposé transversalement à la direction de coulissement longitudinal, et dans lequel s'engage une broche d'entraînement (24) pouvant tourner autour de l'axe de la serrure et disposée sur une plaque frontale (22) du barillet de serrure (23), et en ce que la barre de fermeture (15) porte à une extrémité, un tronçon d'extrémité (19) coudé vers l'intérieur.

2. Coffre de toit selon la revendication 1, caractérisé en ce que la barre de fermeture (15) est pourvue d'une branche transversale (20) renfermant le trou oblong (21).
